# EUROPÄISCHE PATENTSCHRIFT

(11) **EP 1 674 424 B1**
(45) Veröffentlichungstag und Bekanntmachung des Hinweises auf die Patenterteilung: **23.11.2011**
(21) Anmeldenummer: 04030535.1
(22) Anmeldetag: 23.12.2004
(51) Int. Cl.: C01B 5/00, B01J 12/00

(54) **Rekombinationseinrichtung**
Recombination Device
Dispositif de recombinaison

(43) Veröffentlichungstag der Anmeldung: 28.06.2006
(73) Patentinhaber: Hoppecke Technologies GmbH & Co. KG, 08056 Zwickau (DE)
(72) Erfinder: Riegel, Bernhard, Dr., 59929 Brilon (DE); Ruch, Jean, Dr., 59929 Brilon (DE); Cattaneo, Eduardo, Dr., 59929 Brilon-Rösenbeck (DE)
(74) Vertreter: Stenger, Watzke & Ring

(56) Entgegenhaltungen:
- US-A- 3 857 927
- US-A- 4 008 050
- US-A- 4 048 387
- US-A1- 2001 042 344

## Beschreibung

Die Erfindung betrifft eine Rekombinationseinrichtung zur katalytischen Rekombination von in Energiespeichern bzw. Energiewandlern auftretendem Wasserstoff.

Bekanntermaßen verfügen Rekombinationseinrichtungen über einen Katalysator. Als Katalysatoren sind vor allem Platinmetalle bekannt, insbesondere Palladium, das in Form einer dünnen Schicht auf einen Trägerstab, welcher zum Beispiel aus Kupfer, Tonerde oder dergleichen bestehen kann, aufgetragen ist. Der auf diese Weise ausgebildete Katalysatorstab ist in eine Röhre aus porösem Material, beispielsweise einem gasdurchlässigen Keramikrohr zentrisch eingesetzt, wobei der in der Röhre zwischen Katalysatorstab einerseits und Röhreninnenfläche verbleibende freie Ringraum mit einem Absorptionsmaterial befüllt ist. Als Absorptionsmaterial kommen insbesondere Bleioxyde, Silberoxyde, Eisenoxyde, Kupferoxyde, Aluminiumoxyde, Manganoxyde oder dergleichen in Betracht. Die den Katalysatorstab und das Absorptionsmaterial aufnehmende Röhre ist in aller Regel freistehend innerhalb eines gasdichten Behälters, vorzugsweise eines Kunststoffbehälters, angeordnet, welcher Behälter an den Stirnseiten verschlossen ist. Der Behälter verfügt seinerseits über Rohrstutzen zum Anschluß an einen Akkumulator für die Gaszufuhr einerseits und den Wasserablauf andererseits.

Die bei einem Betrieb eines Akkumulators, insbesondere während eines Ladevorganges, entstehenden Gase Wasserstoff und Sauerstoff werden über den einen Rohrstutzen des Behälters in den Behälter geführt, passieren dort die poröse Röhre und das Absorptionsmaterial und werden alsdann am Katalysator zu Wasser rekombiniert. Die Rekombinationsreaktion ist exotherm, weshalb das am Katalysator rekombinierte Wasser zuerst in Form von Wasserdampf vorliegt. Der am Katalysator entstehende Wasserdampf schlägt sich alsdann an der Behälterinnenwandung nieder, kondensiert und fließt über den hierfür vorgesehenen Rohrstutzen zurück in den Akkumulator.

Der mit der Verwendung eines Rekombinators der vorbeschriebenen Art einhergehende Vorteil liegt auf der Hand. Die bei einem Akkumulatorbetrieb frei werdenden Gase Wasserstoff und Sauerstoff werden durch den Rekombinator zu Wasser rekombiniert, welches Wasser nicht verloren, sondern in den Elektrolyten des Akkumulators zurückgeführt wird. Es ist daher nicht erforderlich, destilliertes Wasser in den Elektrolyten des Akkumulators nachzufüllen. Insofern erweist sich ein je nach seiner Größe mit einem oder mehreren Rekombinatoren versehener Akkumulator als wartungsfrei.

Rekombinatoren bzw. Rekombinationseinrichtungen sind beispielsweise aus der US-A-4 008 050, der US-A-3 857 927 oder der US 2001/042344 A1 bekannt. Die aus der US-A-4 008 050 bekannte Rekombinationseinrichtung verfügt über zwei Katalysatorkammern, die in Strömungsrichtung einander nachgeschaltet sind. Der in Strömungsrichtung ersten Katalysatorkammer ist bevorzugterweise ein Absorptionsmaterial vorgeschaltet, welches vom zu rekombinierenden Gas zunächst zu durchströmen ist, bevor es zur in Strömungsrichtung ersten Katalysatorkammer gelangt. Die US-A-3 857 927 offenbart einen Rekombinator mit einem verbesserten Katalysatorbett. Dabei ist das Katalysatorbett bevorzugterweise modular aufgebaut. Aus der US 2001/042344 A1 ist schließlich noch eine Rekombinationseinrichtung bekannt, deren Besonderheit darin besteht, daß Gasdurchführungsleitungen zum Einsatz kommen, die mit einem Granulat befüllt sind, das katalytische Eigenschaften aufweist.

Obgleich sich Rekombinatoren bzw. Rekombinationseinrichtungen der vorbeschriebenen Art in der Praxis bewährt haben, sind sie nicht frei von Nachteilen.

In Abhängigkeit der Akkumulatorkapazität, das heißt in Abhängigkeit der im Rahmen eines Akkumulatorbetriebs freigesetzten Menge an Wasserstoff und Sauerstoff ist die Rekombinationsleistung eines Rekombinators auszulegen. Dies hat zur Folge, daß es je nach Akkumulatorkapazität eines in seiner Rekombinationsleistung hierauf abgestimmten Rekombinators bedarf. In der Konsequenz müssen für unterschiedliche Akkumulatorgrößen unterschiedliche Rekombinatoren zur Verfügung gestellt werden, was die Produktion von Rekombinatoren aufwendig und teuer macht. Zudem ist bei den vorbekannten Rekombinationseinheiten von Nachteil, daß das Absorptionsmaterial durch den am Katalysator entstehenden Wasserdampf an nicht vorhersehbaren Stellen durchnäßt wird, was zu einem zumindest zeitweisen Funktionsausfall an diesen Stellen führen kann. Die Rekombinationsleistung des Rekombinators wird hierdurch nachteilig beeinflußt.

Ausgehend vom vorbeschriebenen Stand der Technik ist es Aufgabe der Erfindung, unter Vermeidung der vorgenannten Nachteile eine Rekombinationseinrichtung zu schaffen, die wahlweise für Energiespeicher- bzw. Energiewandler-Systeme unterschiedlicher Betriebsbedingungen einsetzbar ist und die zudem hilft, einem partiellen Funktionsausfall entgegenzuwirken.

Zur technischen Lösung dieser Aufgabe wird mit der Erfindung vorgeschlagen eine Rekombinationseinrichtung zur katalytischen Rekombination von in Energiespeichern bzw. Energieumwandlern auftretendem Wasserstoff, gebildet aus einzelnen Rekombinationselementen, welche Rekombinationselemente jeweils zumindest einen Katalysator aufweisen, wobei der Katalysator eines jeden Rekombinationselements von einer Ummantelung aus einem Absorptionsmaterial umgeben ist, wobei die Rekombinationselemente unter jeweiliger Zwischenordnung eines Trennmittels in Höhenrichtung übereinander angeordnet sind wobei das Trenmittel aus einem porösen Material besteht das ein Passieren der Gase Wasserstoff und Sauerstoff ermöglicht, gleichzeitig aber deh übergang von Wasserdampf von einem Rekombinationselement zu einem anderen Rekombinationselement unterbindet. Energiespeicher bzw. Energieumwandler im Sinne der Erfindung sind Akkumulatoren, beispielsweise Nickel-Cadmium-Akkumulatoren, Bleiakkumulatoren oder dergleichen Akkumulatoren, sowie andere Systeme, wie zum Beispiel Brennstoffzellen oder dergleichen.

Im Unterschied zum Stand der Technik zielt die Erfindung im Kern darauf ab, Rekombinationseinheiten nicht als solche nur in ihrer gegebenen Bauform verwendbar auszubilden, sondern statt dessen untereinander baugleiche oder nicht baugleiche Rekombinationselemente vorzusehen, die in Abhängigkeit der zu fordernden Rekombinationsleistung miteinander zu einer gemeinsamen Rekombinationseinheit kombinierbar sind, wobei die Rekombinationselemente unter jeweiliger Zwischenordnung eines Trennmittels in Höhenrichtung übereinander angeordnet sind. In Abhängigkeit der Anzahl der eingesetzten Rekombinationselemente verläuft die Rekombination sodann mehrstufig und dadurch effizienter.

Das Herzstück eines Rekombinationselements ist der Katalysator. Der Katalysator kann aus einem beispielsweise mit einem Element der Übergangsgruppe insbesondere Metall der Platingruppe beschichteten Trägerelement gebildet sein. Eine Rekombinationseinrichtung wird aus einer Mehrzahl von einzelnen Rekombinationselementen gebildet, wobei die Rekombinationselemente vorzugsweise nach dem Baukastenprinzip miteinander kombinierbar sind. "Nach dem Baukastenprinzip" im Sinne der Erfindung bedeutet, daß vorzugsweise nach Form, Größe, Rekombinationsleistung und dergleichen unterschiedlich ausgebildete Rekombinationselemente zur Verfügung stehen, die in Abhängigkeit der insgesamt zu schaffenden Rekombinationseinrichtung wahlweise miteinander kombiniert werden können. In vorteilhafter Weise wird so die Möglichkeit geschaffen, standardisierte Rekombinationselemente für die Ausbildung unterschiedlichster Rekombinationseinrichtungen zu verwenden. Im Unterschied zu den aus dem Stand der Technik bekannten Rekombinationseinrichtungen wird so die Herstellung derselben vereinfacht und nicht zuletzt auch preisgünstiger gestaltet, denn ist es nicht weiter erforderlich, in Abhängigkeit der späteren Verwendung, das heißt in Anpassung an die Akkumulatorkapazität entsprechend ausgebildete Rekombinationseinrichtungen vorzuhalten, denn können entsprechende Rekombinationseinrichtungen durch die Kombination unterschiedlicher Rekombinationselemente wahlweise zusammengestellt werden.

Zwecks Ausbildung der erfindungsgemäßen Rekombinationseinrichtung sind eine Mehrzahl von einzelnen Rekombinationselementen in Höhenrichtung übereinander anzuordnen.

Es ist vorgesehen, daß die Rekombinationselemente jeweils zumindest eine aus einem Katalysator und einem den Katalysator umgebenden Absorptionsmaterial gebildete Katalysatorbaugruppe aufweisen. Dabei umgibt das Absorptionsmaterial den Katalysator nach Art einer Ummantelung. Derart ausgebildete Rekombinationselemente können in vorteilhafter Weise nach dem Baukastenprinzip miteinander zu einer Gesamtrekombinationseinrichtung kombiniert werden.

Der aus einem Absorptionsmaterial, welches in bekannter Weise Bleioxyd, Silberoxyd, Eisenoxyd, Kupferoxyd, Aluminiumoxyd, Manganoxyd oder dergleichen sein kann, bestehende Absorber ist nicht unterhalb des Katalysators, sondern den Katalysator umgebend ausgebildet, wobei jedes Rekombinationselement der Rekombinationseinrichtung über ein entsprechendes Absorptionsmaterial verfügt. Da die Rekombinationseinrichtung aus einzelnen in Höhenrichtung übereinander angeordneten Rekombinationselementen besteht, kann ein unkontrollierter, partieller Funktionsausfall des Absorptionsmaterials im wesentlichen vermieden werden, da die durch die erfindungsgemäße Rekombinationseinrichtung bewirkte Rekombination aufgrund des Umstandes, daß die Rekombinationseinrichtung aus einer Mehrzahl einzelner Rekombinationselemente gebildet ist, mehrstufig abläuft. Kommt es nämlich infolge einer Rekombination zu einem Durchnässen des Absorptionsmaterials eines Rekombinationselements, so ist das Absorptionsmaterial der übrigen Rekombinationselemente der Rekombinationseinrichtung hiervon mit der Folge nicht betroffen, als daß das Absorptionsmaterial der übrigen Rekombinationselemente weiterhin trocken bleibt. Die Durchnässung des Absorptionsmaterials eines Rekombinationselements breitet sich mithin in vorteilhafter Weise nicht auf das Absorptionsmaterial der übrigen Rekombinationselemente aus. Damit ist eine im Rahmen einer Rekombination unter Umständen auftretende Durchnässung des Absorptionsmaterials kontrollierbar, was es ermöglicht, die Rekombinationsleistung der gesamten Rekombinationseinrichtung in Entsprechung der bei einer bestimmungsgemäßen Verwendung der Rekombinationseinrichtung auftretenden Durchnässung des Absorptionsmaterials durch Kombination entsprechend vieler Rekombinationselemente zu dimensionieren. Die erfindungsgemäße Rekombinationseinrichtung erweist sich daher gegenüber den aus dem Stand der Technik bekannten Rekombinationseinrichtungen als sehr viel funktionssicherer. Um die Funktionssicherheit der erfindungsgemäßen Rekombinationseinrichtung noch weiter zu steigern, ist erfindungsgemäß vorgesehen, daß die einzelnen Rekombinationselemente der Rekombinationseinrichtung unter jeweiliger Zwischenordnung eines Trennmittels miteinander kombiniert sind. Das Trennmittel kann vorzugsweise aus einem porösen Material bestehen, das ein Passieren der Gase Wasserstoff und Sauerstoff ermöglicht, gleichzeitig aber den Übergang von Wasserdampf von einem Rekombinationselement zu einem anderen Rekombinationselement weitestgehend unterbindet, was beispielsweise dadurch erreicht werden kann, daß das Material, aus dem die Trennmittel bestehen, eine andere Dichte als das die Rekombinationselemente umgebende poröse Material aufweist. Auf diese Weise wird der mit der erfindungsgemäßen Rekombinationseinrichtung bewirkte mehrstufige Rekombinationsablauf zusätzlich unterstützt. Dabei können, je nach Ausgestaltung der Rekombinationseinrichtung, Trennmittel unterschiedlicher Dicke sowohl alternativ als auch kombinativ eingesetzt werden.

Gemäß einem weiteren Merkmal der Erfindung ist vorgesehen, daß die Rekombinationselemente, welche in vorbeschriebener Weise über eine Katalysatorbaugruppe verfügen, in Höhenrichtung übereinander innerhalb eines einseitig verschlossenen Rohres aus porösem Material angeordnet sind, wobei der Innendurchmesser des Rohres im wesentlichen den Außendurchmessern der Rekombinationselemente entspricht. Gemäß dieser Ausgestaltungsform der Erfindung wird das das Absorptionsmaterial der Rekombinationselemente umgebende poröse Material mittels eines Rohres bereitgestellt, wobei die Rekombinationselemente zwecks bestimmungsgemäßer Ausbildung der Rekombinationseinrichtung innerhalb dieses Rohres anzuordnen sind. Zwecks Ausbildung der erfindungsgemäßen Rekombinationseinrichtung sind in Abhängigkeit der zu fordernden Rekombinationsleistung entsprechend viele Rekombinationselemente in ein entsprechend lang ausgebildetes Rohr der vorbeschriebenen Art einzuführen. Die aus Rekombinationselementen, Trennmitteln und Rohr bestehende Rekombinationseinrichtung kann dann bestimmungsgemäß innerhalb des vom Rekombinator zur Verfügung gestellten Behälters positioniert werden.

Gemäß einer alternativen Ausgestaltungsform der Erfindung ist die Katalysatorbaugruppe eines jeden Rekombinationselements von einer Ummantelung aus einem porösen Material umgeben. Gemäß dieser alternativen Ausgestaltungsform der Erfindung bedarf es eines die Rekombinationselemente aufnehmenden Rohres nicht. Jedes der einzelnen Rekombinationselemente ist seinerseits mit einer das Absorptionsmaterial umgebenden Ummantelung aus porösem Material versehen, so daß es zur Ausbildung der erfindungsgemäßen Rekombinationseinrichtung lediglich der Kombination von Rekombinationselementen der vorbeschriebenen Art bedarf. Die einzelnen Rekombinationselemente werden in Höhenrichtung übereinander angeordnet, wobei das in Höhenrichtung zu oberst angeordnete Rekombinationselement mit einem Abschlußelement versehen werden kann. Das Abschlußelement kann dabei nach Art eines Deckels ausgebildet sein und aus einem porösen Material, wie zum Beispiel Keramik bestehen.

Um eine lagesichere Verbindung der einzelnen Rekombinationselemente zu einer gemeinsamen Rekombinationseinrichtung sicherzustellen, kann gemäß einem weiteren Merkmal der Erfindung vorgesehen sein, daß die Flachseiten der einzelnen Rekombinationselemente Verbindungsmittel tragen. Geeignete Verbindungsmittel können beispielsweise Bajonettverschlüsse, Steckverschlüsse, Rastverschlüsse oder dergleichen sein. Von Bedeutung ist allein, daß die Verbindungsmittel dafür Sorge tragen, daß die in Höhenrichtung übereinander angeordneten Rekombinationselemente bzw. der Absorber lagesicher zueinander fixiert sind und sich nicht relativ gegenüber einander verschieben können. Die Verwendung von Verbindungsmitteln ist allerdings rein optional und nicht zwingend. So kann beispielsweise auf die Ausbildung solcher Verbindungsmittel verzichtet werden, wenn die einzelnen Rekombinationselemente der Rekombinationseinrichtung innerhalb eines Rohres, wie vorstehend beschrieben, angeordnet sind. In diesem Fall sorgt das die Rekombinationselemente umgebende Rohr für einen lagesicheren Halt der einzelnen Rekombinationselemente. In Ergänzung zum Vorbeschriebenen sei angemerkt, daß eine Verbindung der einzelnen Rekombinationselemente auch durch eine Klebverbindung erreicht werden kann.

Weitere Vorteile und Merkmale der Erfindung ergeben sich aus der Beschreibung anhand der nachfolgenden Figuren. Dabei zeigen:
- Fig. 1: ein Rekombinator mit einer Rekombinationseinrichtung gemäß der Erfindung;
- Fig. 2: ein Rekombinationselement in einer geschnittenen Seitenansicht gemäß Schnittlinie VI-VI nach Fig. 1;
- Fig. 3: eine Rekombinationseinrichtung gemäß einer alternativen Ausführungsform;
- Fig. 4: eine Rekombinationseinrichtung gemäß einer weiteren alternativen Ausführungsform und
- Fig. 5: eine Rekombinationseinrichtung gemäß einer weiteren alternativen Ausführungsform.

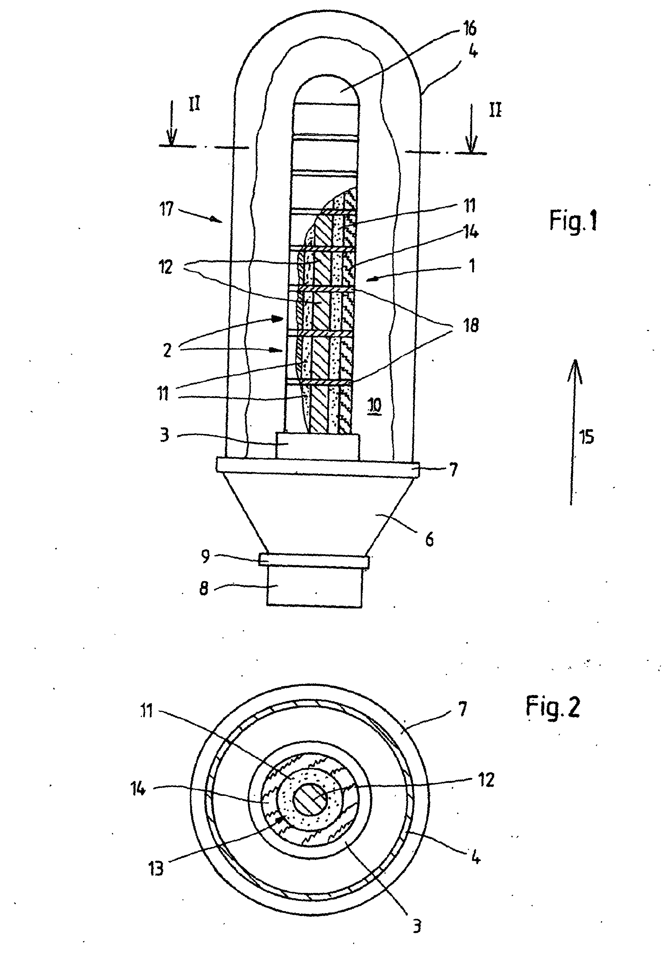

Fig. 1 zeigt in einer teilgeschnittenen Seitenansicht einen Rekombinator 17, der über eine erfindungsgemäße Rekombinationseinrichtung 1 verfügt. Der Rekombinator 17 besteht in an sich bekannter Weise aus einem Anschlußstutzen 8, einem in Höhenrichtung 15 darüber liegenden Stutzenelement 6, einem aus einem gasdichten Material bestehenden Behälter 4 sowie einem den Behälter 4 mit dem Stutzenelement 6 verbindenden Verschlußring 7. Am Anschlußstutzen 8 können in der Fig. nicht dargestellte Nocken angeformt sein, um in einer Art einer Bajonettverbindung den Rekombinator 17 an der Zellenöffnung eines in der Fig. nicht gezeigten Akkumulators anzuordnen. Ein in Höhenrichtung 15 über dem Anschlußstutzen 8 angeordneter Aufsetzflansch 9 kann der Aufnahme eines in der Fig. nicht gezeigten Dichtringes dienen. Die Rekombinationseinrichtung 1 kann zudem über eine in der Fig. nicht dargestellte Zündrückschlagsicherung, wie zum Beispiel in Form einer Fritte oder eines Ventils verfügen. Eine solche Zündrückschlagsicherung kann Bestandteil eines in der Fig. nicht gezeigten Entgasungskanal sein.

Innerhalb des vom Behälter 4 umschlossenen Volumenraums 10 ist ein vom Stutzenelement 6 getragener Sockel 3 angeordnet, welcher Sockel 3 nach Art eines Rohrstutzens ausgebildet sein kann und der Aufnahme der erfindungsgemäßen Rekombinationseinrichtung 1 dient.

Der Sockel 3, das Stutzenelement 6, der Aufsetzflansch 9 und der Anschlußstutzen 8 sind vorzugsweise als einstückiges Bauteil ausgebildet und bestehen aus Kunststoff. Der Behälter 4, welcher vorzugsweise gleichfalls aus Kunststoff besteht, ist stutzenelementseitig offen ausgebildet und kann zwecks Anbindung an das Stutzenelement 6 stutzenelementseitig über entsprechende Verbindungs- und/oder Rastmittel verfügen. Für eine sichere Festlegung des Behälters 4 am Stutzenelement 6 dient zudem der Verschlußring 7.

Die Rekombinationseinrichtung 1 ist in an sich bekannter Weise stabförmig ausgebildet, wie Fig. 1 erkennen läßt. Die Rekombinationseinrichtung 1 ist aus einzelnen in Höhenrichtung 15 übereinander angeordneten Rekombinationselementen 2 gebildet. Das in Höhenrichtung 15 zu oberst angeordnete Kombinationselement 2 trägt dabei ein Abschlußelement 16 in Form eines Deckels.

Das Rekombinationselement 2 weist einen Katalysator 12 auf. Der Katalysator 12 kann in herkömmlicher Weise ausgebildet sein und beispielsweise aus einem Tragelement gebildet sein, das außenumfangseitig mit einem Katalysatormaterial beschichtet ist. Als Katalysatormaterial kann beispielsweise Palladium zum Einsatz kommen. Das Tragelement des Katalysators seinerseits ist, wie insbesondere Fig. 1 erkennen läßt, im wesentlichen segmentartig ausgebildet und kann aus Keramik, Tonerde oder dergleichen gebildet sein. Allgemein wird ein hochporöses, hitze-und korrosionsbeständiges Material bevorzugt.

Die Rekombinationselemente 2 werden zwecks Ausbildung der erfindungsgemäßen Rekombinationseinrichtung 1 in Höhenrichtung 15 übereinander angeordnet, wobei in Abhängigkeit der von der Rekombinationseinrichtung 1 zu fordernden Rekombinationsleistung entsprechend viele Rekombinationselemente 2 nach dem Baukastenprinzip miteinander kombiniert werden können. Für eine lagesichere Anordnung der Rekombinationselemente 2 können diese auf ihren Flachseiten jeweils in den Fign. nicht dargestellte Verbindungsmittel tragen.

Die Rekombinationselemente 2 sind im wesentlichen scheibenförmig ausgebildet, doch versteht es sich von selbst, daß auch andere Geometrien gewählt werden können.

Gemäß der in Fig. 1 gezeigten Ausgestaltungsform der Erfindung strömen die Gase Wasserstoff und Sauerstoff über den Anschlußstutzen 8 und das Stutzenelement 6 in den vom Rekombinator 17 bereitgestellten Volumeninnenraum 10.

Gemäß einer alternativen Ausgestaltungsform kann der Rekombinator 17 quer zum Anschlußstutzen 8, das heißt längs eines in der Fig. nicht gezeigten Akkumulatordeckels, ausgerichtet sein. Die Ausbildung der Rekombinationseinrichtung 1 entspricht der schon anhand von Fig. 1 vorbeschriebenen Ausgestaltungsform, wobei die Höhenrichtung 15 dann in Entsprechung der Ausrichtung des Rekombinators 17 mit Bezug auf die Zeichnungsebene nach Fig. 1 nach rechts zeigt.

Die gezeigte Rekombinationseinrichtung 1 besteht aus Rekombinationselementen 2 einerseits und Trennmitteln 18 andererseits, wobei in Höhenrichtung 15 einander abwechselnd Rekombinationselemente 2 und Trennmittel 18 angeordnet sind.

Die Rekombinationselemente 2 verfügen über eine Katalysatorbaugruppe 13. Die Katalysatorbaugruppe 13 besteht, wie insbesondere Fig. 2 entnommen werden kann, aus einem Katalysator 12 einerseits und einem Absorptionsmaterial 11 andererseits, welches den Katalysator nach Art einer Ummantelung umgibt. Sowohl der Katalysator 12 als auch das Absorptionsmaterial 11 können in herkömmlicher Weise ausgebildet sein. Die Katalysatorbaugruppe 13 eines jeden Rekombinationselements 2 ist von einer Ummantelung 14 aus einem porösen Material umgeben. Aus gleichem Material bestehen auch die die einzelnen Rekombinationselemente 2 voneinander trennenden Trennmittel 18, die, wie in Fig. 1 dargestellt ist, zwischen jeweils zwei in Höhenrichtung 15 übereinander angeordneten Rekombinationselementen 2 ausgebildet sind.

Sinn und Zweck der Trennmittel 18 ist es, einen mehrstufigen Betrieb der Rekombinationseinrichtung 1 dahingehend zu fördern, daß sich der in dem Absorptionsmaterial 11 eines Rekombinationselements 2 niederschlagende Wasserdampf nicht unkontrolliert auf das Absorptionsmaterial 11 der benachbarten Rekombinationselemente 2 übergeht. Ein unkontrollierbarer, partieller Funktionsausfall des Absorptionsmaterials 11 kann hierdurch in vorteilhafter Weise weitestgehend unterbunden werden.

In Abwandlung zu der in den Fign. 1 und 2 dargestellten Ausführungsform kann auch vorgesehen sein, daß die die Katalysatorbaugruppe 13 umfassenden Rekombinationselemente 2 innerhalb eines aus einem porösen Material gebildeten Rohres angeordnet sind. In das Rohr sind gemäß dieser alternativen Ausgestaltungsform abwechselnd die Rekombinationselemente 2 und die Trennmittel 18 einzuführen.

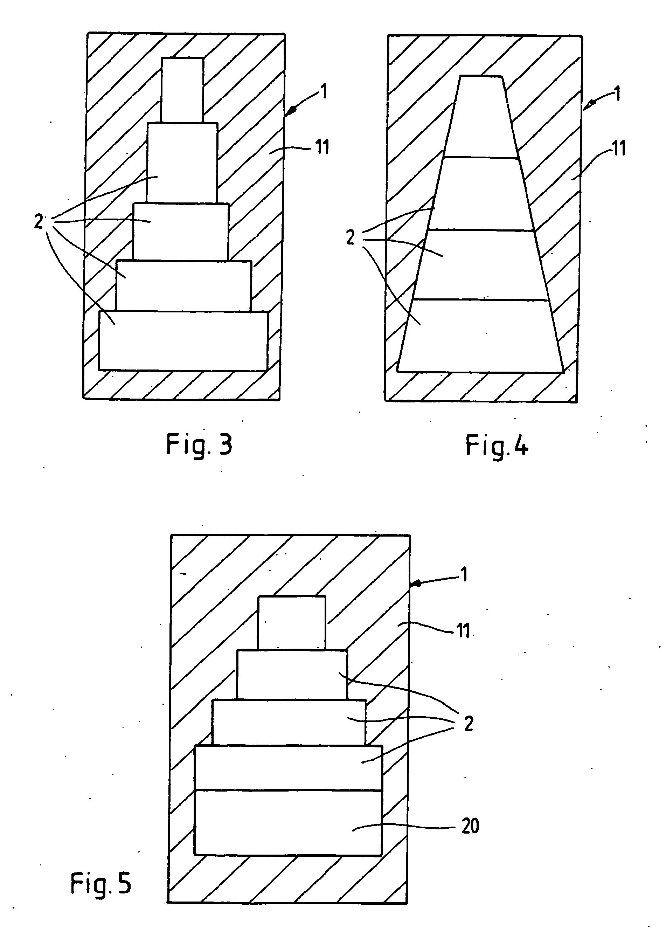

In den Fign. 3 und 4 sind alternative Ausgestaltungsformen der erfindungsgemäßen Rekombinationseinrichtung 1 dargestellt.

Fig. 3 zeigt eine Rekombinationseinrichtung 1, die aus einer Mehrzahl von in Höhenrichtung übereinander angeordneten Rekombinationselementen 2 gebildet ist, wie vorstehend schon anhand der vorhergehenden Fign. beschrieben. Die Besonderheit dieser Rekombinationseinrichtung 1 besteht darin, daß die einzelnen Rekombinationselemente 2 von unterschiedlicher Größe sind. Wie zu erkennen ist, sind die Rekombinationselemente 2 kegelförmig übereinander angeordnet, wobei das zu unterst angeordnete Rekombinationselement 2 im Vergleich zu den übrigen Rekombinationselementen 2 die größte bzw. kleinste Grundfläche - je nach Ausgestaltung der Kegelform - aufweist. Der Aufbau ist, wie Fig. 3 erkennen läßt, treppenförmig.

Bis auf das zu unterst angeordnete Rekombinationselement 2 sind die Rekombinationselemente 2 von einem Absorptionsmaterial 11 umgeben. Beispielsweise kann in diesem Zusammenhang vorgesehen sein, daß das Absorptionsmaterial 11 eine Art Hülse bildet, in der die Rekombinationselemente 2 angeordnet sind. Der besseren Übersicht wegen ist in Fig. 3 eine mögliche Ummantelung aus einem porösen Material nicht dargestellt.

Fig. 4 zeigt in einer alternativen Ausgestaltungsform eine bauliche Abwandlung der in Fig. 3 dargestellten Rekombinationseinrichtung. Auch gemäß dieser Ausgestaltungsform sind die einzelnen Rekombinationselemente 2 kegelförmig in Höhenrichtung übereinander angeordnet. Im Unterschied zu dem Ausführungsbeispiel nach Fig. 3 allerdings nicht treppenförmig. Dabei kann im Sinne der Erfindung auch vorgesehen sein, daß die Rekombinationselemente 2 zu einer Gesamteinheit zusammengefaßt einstückig ausgebildet sind. Die erfindungsgemäße Mehrstufigkeit des Rekombinationsprozesses ergibt sich dabei aufgrund der kegelförmigen Ausgestaltung der zu einer gemeinsamen Einheit zusammengefaßten Rekombinationselemente 2, denn nimmt die Querschnittsfläche des Kegels in Höhenrichtung ab. Diese Querschnittsverjüngung in Höhenrichtung bewirkt den erfindungsgemäßen mehrstufigen Rekombinationsprozeß.

Eine weitere alternative Ausgestaltungsform der Rekombinationseinrichtung zeigt Fig. 5. Im Unterschied zu der Ausgestaltungsform nach Fig. 3 ist bei der Ausgestaltungsform nach Fig. 9 vorgesehen, daß unterhalb des zu unterst angeordneten Rekombinationselements 2 ein Leerraum 20 zwischen zuletzt angeordnetem Rekombinationselement 2 und dem Absorptionsmaterial 11 vorgesehen ist.

Es versteht sich von selbst, daß die in den Fign. 3 bis 5 gezeigten Ausführungsformen nur beispielhaft sind und daß die Rekombinationseinrichtung 1 beispielsweise auch derart ausgebildet sein kann, daß das zu unterst angeordnete Rekombinationselement 2 die kleinste Grundfläche aller eingesetzten Rekombinationsbauelemente 2 aufweist.

Das Absorptionsmaterial 11, wie es beispielhaft in den Fign. 3 bis 5 dargestellt ist, kann beliebig aufgebaut sein. So ist beispielsweise die Verwendung von gepreßten Kugeln möglich. Die Funktion des Absorptionsmaterials besteht letztendlich allein darin, einerseits wasserdurchlässig zu sein und eine Entgiftung zu bewirken und andererseits als Gasbremse zu dienen.

Die vorbeschriebenen Ausführungsformen sollen lediglich der näheren Erläuterung der Erfindung dienen und wirken daher nicht beschränkend. Die dargestellten Baugruppen sind nicht maßstabsgetreu wiedergegeben. Im übrigen liegt es im Rahmen der Erfindung, Rekombinationselemente 2 vorzusehen, die sich nach Art, Größe, Rekombinationsleistung oder dergleichen voneinander unterscheiden. Für die Erfindung ist es allein von Bedeutung, daß die Rekombinationseinrichtung 1 aus einzelnen Rekombinationselementen 2 gebildet ist, die wahlweise nach dem Baukastenprinzip miteinander kombinierbar sind.

Das anhand der vorerläuterten Fign. beschriebene Beispiel wirkt insofern auch nicht beschränkend, als daß die erfindungsgemäße Rekombinationseinrichtung nur in Akkumulatoren zum Einsatz kommt. Vielmehr kann vorgesehen sein, die Rekombinationseinrichtung ganz allgemein im Zusammenhang mit Energiespeichern bzw. Energiewandlern zu verwenden, so zum Beispiel auch in Brennstoffzellen. Im Sinne der Erfindung sind dabei Energiespeicher bzw. Energiewandler solche Speicher bzw. Wandler, bei denen zumindest Wasserstoff freigesetzt wird.

### Bezugszeichenliste

- 1: Rekombinationseinrichtung
- 2: Rekombinationselement
- 3: Sockel
- 4: Behälter
- 6: Stutzenelement
- 7: Verschlußring
- 8: Anschlußstutzen
- 9: Aufsetzflansch
- 10: Volumenraum
- 11: Absorptionsmaterial
- 12: Katalysator
- 13: Katalysatorbaugruppe
- 14: Ummantelung
- 15: Höhenrichtung
- 16: Abschlußelement
- 17: Rekombinator
- 18: Trennmittel
- 19: Absorber
- 20: Leerraum

## Patentansprüche

1. Rekombinationseinrichtung zur katalytischen Rekombination von in Energiespeichern bzw. Energiewandlern auftretendem Wasserstoff, gebildet aus einzelnen Rekombinationselementen (2), welche Rekombinationselemente (2) jeweils zumindest einen Katalysator (12) aufweisen, wobei der Katalysator (12) eines jeden Rekombinationselements (2) von einer Ummantelung aus einem Absorptionsmaterial (11) umgeben ist, wobei die Rekombinationselemente (2) unter jeweiliger Zwischenordnung eines Trennmittels (18) in Höhenrichtung (15) übereinander angeordnet sind, wobei das Trennmittel aus einem porösen Material besteht, das ein Passieren der Gase Wasserstoff und Sauerstoff ermöglicht, gleichzeitig aber den übergang von Wasserdampf von einem Rekombinationselement zu einem anderen Rekombinationselement unterbindet.

2. Rekombinationseinrichtung nach Anspruch 1, **dadurch gekennzeichnet, daß** der Katalysator (12) zusammen mit der ihn umgebenden Ummantelung aus einem Absorptionsmaterial (11) eine Katalysatorbaugruppe (13) ausbildet.

3. Rekombinationseinrichtung nach Anspruch 2, **dadurch gekennzeichnet, daß** die Katalysatorbaugruppe (13) eines jeden Rekombinationselements (2) von einer Ummantelung (14) aus einem porösen Material umgeben ist.

4. Rekombinationseinrichtung nach einem der vorhergehenden Ansprüche 1 bis 3, **dadurch gekennzeichnet, daß** das in Höhenrichtung (15) zu oberst angeordnete Rekombinationselement (2) mit einem Abschlußelement (16) versehen ist.

5. Rekombinationseinrichtung nach einem der vorhergehenden Ansprüche 1 bis 4, **dadurch gekennzeichnet, daß** die Flachseiten der Rekombinationselemente (2) jeweils Verbindungsmittel tragen.

6. Rekombinationseinrichtung nach einem der vorhergehenden Ansprüche 1 bis 5, **dadurch gekennzeichnet, daß** die Rekombinationselemente (2) in Höhenrichtung (15) übereinander innerhalb eines einseitig verschlossenen Rohres aus porösem Material angeordnet sind, wobei der Innendurchmesser des Rohres im wesentlichen den Außendurchmessem der Rekombinationselemente (2) entspricht.

7. Rekombinationseinrichtung nach Anspruch 1, **dadurch gekennzeichnet, daß** das Trennmittel (18) aus porösem Material, vorzugsweise Keramik, gebildet ist.

## Claims

1. Recombination device for the catalytic recombination of hydrogen occurring in energy storages or energy converters, said recombination device being composed of individual recombination elements (2), each of which has at least one catalyst (12), the catalyst (12) of each recombination element (2) being surrounded by an envelope from an absorption material (11), wherein the recombination elements (2) are arranged one above the other in the height direction, with a separating means (18) respectively interposed there between, said separating means (18) consisting of a porous material which enables the passage of the gases hydrogen and oxygen but simultaneously prevents the transfer of water steam from one recombination element to another recombination element.

2. Recombination device according to claim 1, **characterized in that** the catalyst (12) together with its surrounding envelope made of an absorption material (11) forms a catalyst assembly (13).

3. Recombination device according to claim 1, **characterized in that** the catalyst assembly (13) of each recombination element (2) is surrounded by an envelope (14) made of a porous material.

4. Recombination device according to one of the preceding claims 1 to 3, **characterized in that** the recombination element (2) which is uppermost positioned in the height direction (15) is provided with an end element (16).

5. Recombination device according to one of the preceding claims 1 to 4, **characterized in that** the flat sides of the recombination elements (2) each carry connection means.

6. Recombination device according to one of the preceding claims 1 to 5, **characterized in that** the recombination elements (2) are arranged one above the other in the height direction (15) inside a tube made of porous material and closed on its one side, wherein the inner diameter of the tube substantially corresponds to the outer diameters of the recombination elements (2).

7. Recombination device according to claim 1, **characterized in that** the separating means (18) is formed from a porous material, preferably from ceramics.

## Revendications

1. Dispositif de recombinaison pour la recombinaison catalytique d'hydrogène qui apparaît dans des accumulateurs d'énergie ou des convertisseurs d'énergie, formé par différents éléments de recombinaison (2), lesquels éléments de recombinaison (2) présentent chacun au moins un catalyseur (12), le catalyseur (12) de chacun des éléments de recombinaison (2) étant entouré par une enveloppe en un matériau d'absorption (11), les éléments de recombinaison (2) étant placés superposés avec l'intercalation respective d'un moyen de séparation (18) dans le sens de la hauteur (1), le moyen de séparation étant constitué par un matériau poreux qui rend possible le passage des gaz hydrogène et oxygène tout en empêchant cependant simultanément le transfert de vapeur d'eau d'un élément de recombinaison vers un autre élément de recombinaison.

2. Dispositif de recombinaison selon la revendication 1, **caractérisé en ce que** le catalyseur (12) forme un composant catalyseur (13) avec l'enveloppe qui l'entoure en un matériau d'absorption (11).

3. Dispositif de recombinaison selon la revendication 2, **caractérisé en ce que** le composant catalyseur (13) de chacun des éléments de recombinaison (2) est entouré par une enveloppe (14) en un matériau poreux.

4. Dispositif de recombinaison selon l'une des revendications précédentes 1 à 3, **caractérisé en ce que** l'élément de recombinaison (2) placé le plus haut dans le sens de la hauteur (15) est pourvu d'un élément de fermeture (16).

5. Dispositif de recombinaison selon l'une des revendications précédentes 1 à 4, **caractérisé en ce que** les côtés plats des éléments de recombinaison (2) portent chacun des moyens de raccord.

6. Dispositif de recombinaison selon l'une des revendications précédentes 1 à 5, **caractérisé en ce que** les éléments de recombinaison (2) sont placés superposés dans le sens de la hauteur (15) à l'intérieur d'un tube fermé d'un côté en matériau poreux, le diamètre intérieur du tube correspond substantiellement aux diamètres extérieurs des éléments de recombinaison (2).

7. Dispositif de recombinaison selon la revendication 1, **caractérisé en ce que** le moyen de séparation (18) est formé en matériau poreux, de préférence en céramique.
